# EUROPEAN PATENT APPLICATION

(11) **EP 4 745 704 A1**
(43) Date of publication of application: **20.05.2026**
(21) Application number: 23949053.5
(22) Date of filing: 21.11.2023
(51) Int. Cl.: G05D 1/661

(54) **PILE RETURNING METHOD AND APPARATUS FOR UNDERWATER CLEANING ROBOT, AND UNDERWATER CLEANING ROBOT**

(30) Priority: 14.08.2023 CN 202311022738
(71) Applicant: Wybotics Co., Ltd, Tianjin 300462 (CN)
(72) Inventor: LI, Xiaotian, Tianjin 300462 (CN); WANG, Yueming, Tianjin 300462 (CN); LI, Cheng, Tianjin 300462 (CN)
(74) Representative: Winter, Brandl - Partnerschaft mbB
(86) International application number: PCT/CN2023/133040
(87) International publication number: WO 2025/035636

(57) **Abstract**

A station returning method and apparatus for an underwater cleaning robot, and the underwater cleaning robot are disclosed. Ultrasonic signals sent by a charging station are received by means of at least two ultrasonic receiving units positioned at different positions of the underwater cleaning robot in response to a station returning instruction to the underwater cleaning robot, where the station returning instruction is used for instructing the underwater cleaning robot to dock with the charging station. The underwater cleaning robot is controlled to move towards the charging station based on signal parameters of the ultrasonic signals received by the at least two ultrasonic receiving units. When an RF signal sent by the charging station is received by means of an RF receiving unit, the underwater cleaning robot is controlled to return to the charging station based on the RF signal, such that the underwater cleaning robot can dock with the charging station. Thus, the underwater cleaning robot can be charged by using the charging station, and the efficiency of charging the underwater cleaning robot is improved.

## Description

### CROSS REFERENCE TO RELATED APPLICATION

The present disclosure claims priority to Chinese Patent Application No. 2023110227383, entitled "STATION RETURNING METHOD AND APPARATUS FOR UNDERWATER CLEANING ROBOT, AND UNDERWATER CLEANING ROBOT" and filed on August 14, 2023, the entire contents of which are incorporated herein by reference.

### TECHNICAL FIELD

The present disclosure relates to the field of robot technology, and more particularly, to a station returning method and apparatus for an underwater cleaning robot, and the underwater cleaning robot.

### BACKGROUND

With the development of computer technologies, robot technologies have also developed rapidly. For example, users use vacuum cleaning robots to clean floors of houses, use window cleaning robots to clean windows of the houses, and use underwater cleaning robots to clean pools.

In related technologies, when the underwater cleaning robots are used to clean the pools, the underwater cleaning robots can operate continuously until their batteries run out. After their batteries run out, the underwater cleaning robots may stop at bottoms of the pools. The underwater cleaning robots need to be picked out of water by workers using tools, and need to be charged for operation again.

### SUMMARY

Embodiments of the present disclosure provide a station returning method and apparatus for an underwater cleaning robot, and the underwater cleaning robot, which can improve the efficiency of charging the underwater cleaning robot and improve the intelligence degree of the underwater cleaning robot. The technical solutions are described as follows.

In one aspect, there is provided a station returning method for an underwater cleaning robot. The method includes:
receiving ultrasonic signals sent by a charging station by means of at least two ultrasonic receiving units of the underwater cleaning robot in response to a station returning instruction to the underwater cleaning robot, the station returning instruction being used for instructing the underwater cleaning robot to dock with the charging station, and the at least two ultrasonic receiving units being positioned at different positions of the underwater cleaning robot; and
controlling the underwater cleaning robot to move towards the charging station based on signal parameters of the ultrasonic signals received by the at least two ultrasonic receiving units.

In another aspect, there is provided a station returning apparatus for an underwater cleaning robot. The apparatus includes:
a receiving module configured to receive ultrasonic signals sent by a charging station by means of at least two ultrasonic receiving units of the underwater cleaning robot in response to a station returning instruction to the underwater cleaning robot, the station returning instruction being used for instructing the underwater cleaning robot to dock with the charging station, and the at least two ultrasonic receiving units being positioned at different positions of the underwater cleaning robot; and
a moving module configured to control the underwater cleaning robot to move towards the charging station based on signal parameters of the ultrasonic signals received by the at least two ultrasonic receiving units.

In yet another aspect, there is provided an underwater cleaning robot, which includes a robot controller comprising one or more processors and one or more memories, where the one or more memories store at least one computer program loaded and executed by the one or more processors to perform the station returning method for the underwater cleaning robot.

In still another aspect, there is provided a computer-readable storage medium, which stores at least one computer program loaded and executed by a processor to perform the station returning method for the underwater cleaning robot.

In still another aspect, there is provided a computer program product or a computer program, which includes a program code stored in the computer-readable storage medium. The processor of the robot controller reads the program code from the computer-readable storage medium and executes it, causing the robot controller to perform the station returning method for the underwater cleaning robot.

### BRIEF DESCRIPTION OF THE DRAWINGS

To describe the technical solutions in the embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.
FIG. 1 is a schematic diagram of an underwater cleaning robot on a pool bottom according to an embodiment of the present disclosure;
FIG. 2 is a flowchart of a station returning method for an underwater cleaning robot according to an embodiment of the present disclosure;
FIG. 3 is a flowchart of another station returning method for an underwater cleaning robot according to an embodiment of the present disclosure;
FIG. 4 is a schematic structural diagram of a station returning apparatus for an underwater cleaning robot according to an embodiment of the present disclosure; and
FIG. 5 is a schematic structural diagram of an underwater cleaning robot according to an embodiment of the present disclosure.

### DETAILED DESCRIPTION

To make the objectives, technical solutions and advantages of the present disclosure clearer, the embodiments of the present disclosure will be further described in detail below with reference to the accompanying drawings.

Terms such as "first" and "second" in the present disclosure are used to distinguish between the same or similar items whose roles and functions are basically the same. It should be understood that there is no logical or temporal dependency between "first", "second", and "nth", nor is there a limitation on quantity and execution order.

First, a brief introduction is made to terms involved in the embodiments of the present disclosure.

Underwater cleaning robot: a robot used for performing underwater cleaning tasks. For example, the underwater cleaning robot is placed in a pool, such that the underwater cleaning robot can clean the bottom and walls of the pool.

Ultrasonic wave: a mechanical wave with an extremely short wavelength, which is typically shorter than 2 cm (centimeters) in air. The ultrasonic wave relies on a medium for propagation and cannot exist in vacuum (such as outer space). The ultrasonic wave travels farther in water than in air, and in some scenarios, the propagation distance of the ultrasonic wave in water can reach several hundred meters.

Radio Frequency (RF): referring to electromagnetic frequency that can radiate into space, ranging from 300 kHz to 300 GHz. Radio Frequency refers to RF current, abbreviated as RF, which is an abbreviation for a high-frequency alternating electromagnetic wave. Alternating current (AC) that changes less than 1,000 times per second is referred to as low-frequency current, while AC current that changes more than 10000 times per second is referred to as high-frequency current, and RF is such high-frequency current. RF (300 kHz to 300 GHz) represents a higher frequency band for high frequency (above 10 kHz), and microwave band (300 MHz to 300 GHz) represents a higher frequency band for RF. Compared to the ultrasonic wave, an RF signal propagates a very short distance in water. In some scenarios, the RF signal can travel only about 2 meters in water.

In existing technologies, salvage and charging operations require manual intervention by workers, resulting in lower efficiency of charging the underwater cleaning robot.

After the terms involved in the embodiments of the present disclosure are introduced, application scenarios of the embodiments of the present disclosure will be explained below.

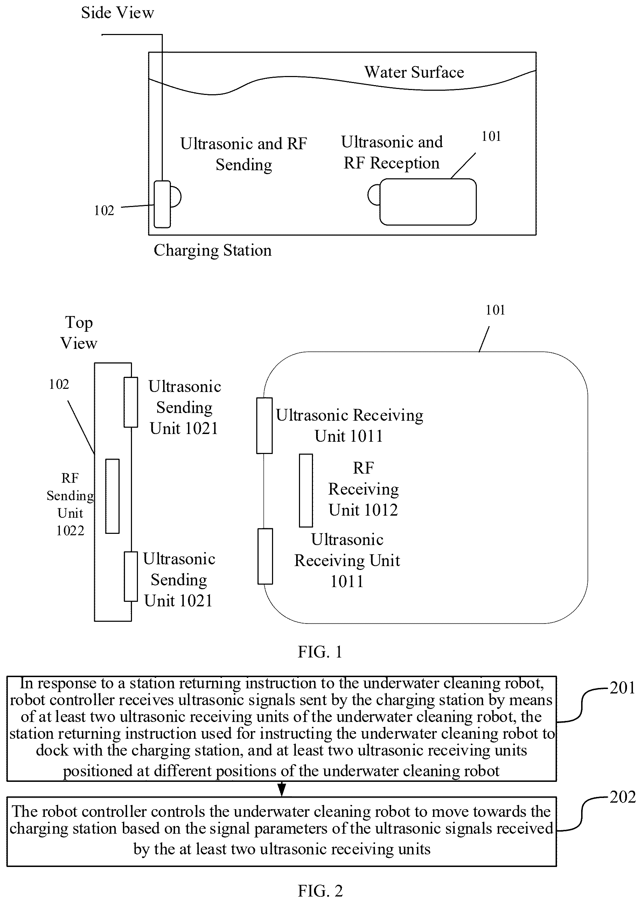

The technical solutions provided in the embodiments of the present disclosure can be applied in a scenario of controlling the underwater cleaning robot to clean the bottom of the pool (as an example). Referring to FIG. 1, the underwater cleaning robot 101 can move on the bottom of the pool to clean the bottom of the pool. During the movement of the underwater cleaning robot 101 on the bottom of the pool, a water pump of the underwater cleaning robot 101 is started, such that a liquid in the pool is sucked into a filtering box of the underwater cleaning robot 101 through a water inlet at the bottom of the underwater cleaning robot 101. The liquid is filtered by the filtering box, where dirt in the liquid is retained in the filtering box, and the filtered liquid is discharged through a water outlet of the underwater cleaning robot 101. In this way, cleaning of the bottom of the pool is achieved. A charging station 102 is arranged in the pool, and can be used to charge the underwater cleaning robot 101. The charging station 102 includes an ultrasonic sending unit 1021 and an RF sending unit 1022, where the ultrasonic sending unit 1021 is configured to send an ultrasonic signal, and the RF sending unit 1022 is configured to send an RF signal. Correspondingly, the underwater cleaning robot includes an ultrasonic receiving unit 1011 and an RF receiving unit 1012, where the ultrasonic receiving unit 1011 is configured to receive the ultrasonic signal sent by the charging station 102, and the RF receiving unit 1012 is configured to receive the RF signal sent by the charging station 102.

After using a station returning method for an underwater cleaning robot provided in the embodiments of the present disclosure, in response to a station returning instruction to the underwater cleaning robot 101, the ultrasonic signals sent by the charging station are received by means of at least two ultrasonic receiving units 1011 of the underwater cleaning robot 100, where the station returning instruction is used for instructing the underwater cleaning robot 101 to dock with the charging station 102, such that the underwater cleaning robot 101 is charged by means of the charging station 102. The underwater cleaning robot 101 is controlled to move towards the charging station 102 based on signal parameters of the ultrasonic signals received by the at least two ultrasonic receiving units 1011. When the RF signal sent by the charging station 102 is received by means of the RF receiving unit 1012, the underwater cleaning robot 101 is controlled to return to the charging station based on the RF signal. Thus, the underwater cleaning robot automatically returns to the charging station for charging, which improves the efficiency of charging the underwater cleaning robot and thus improves the intelligence degree of the underwater cleaning robot.

The technical solutions provided in the embodiments of the present disclosure are described below. FIG. 2 is a flowchart of a station returning method for an underwater cleaning robot according to an embodiment of the present disclosure. Referring to FIG. 2, taking an example in which the method is executed by a robot controller of the underwater cleaning robot, the method includes the following steps.

In Step 201, in response to a station returning instruction to the underwater cleaning robot, the robot controller receives the ultrasonic signals sent by the charging station by means of the at least two ultrasonic receiving units of the underwater cleaning robot. The station returning instruction is used for instructing the underwater cleaning robot to dock with the charging station. The at least two ultrasonic receiving units are positioned at different positions of the underwater cleaning robot.

The robot controller is built into the underwater cleaning robot to control the underwater cleaning robot. The underwater cleaning robot is used to clean the bottom (and/or walls) of a pool. When the underwater cleaning robot is positioned at the bottom of the pool, it can move on the bottom of the pool and perform cleaning tasks. Correspondingly, the motion of the underwater cleaning robot includes the movement or rotation of the underwater cleaning robot at the bottom of the pool. The bottom of the underwater cleaning robot is equipped with a travelling unit. By driving the travelling unit, the underwater cleaning robot can be controlled to move on the bottom of the pool. The travelling unit includes a travelling wheel. By driving the travelling unit, the travelling wheel can be driven to rotate, such that the underwater cleaning robot is driven to move. The station returning instruction is used for instructing the underwater cleaning robot to dock with the charging station, such that the underwater cleaning robot is charged by means of the charging station. In addition to charging the underwater cleaning robot, the charging station can also send the ultrasonic signal and the RF signal, both of which are used for guiding the underwater cleaning robot to dock with the charging station. At least two ultrasonic receiving units of the underwater cleaning robot are configured to receive the ultrasonic signals sent by the charging station. The at least two ultrasonic receiving units are positioned at different positions of the underwater cleaning robot, such that the robot controller achieves positioning of the underwater cleaning robot by means of the ultrasonic signals received by the at least two ultrasonic receiving units, where the positioning here refers to determining a relative positional relationship between the underwater cleaning robot and the charging station.

In Step 202, the robot controller controls the underwater cleaning robot to move towards the charging station based on the signal parameters of the ultrasonic signals received by the at least two ultrasonic receiving units.

The ultrasonic signal is also known as an ultrasonic wave, and the signal parameter of the ultrasonic signal is used for representing a reception parameter corresponding to the ultrasonic signal when each ultrasonic receiving unit receives the ultrasonic signal. In some embodiments, the signal parameter includes time when each ultrasonic receiving unit receives the ultrasonic signal and the signal strength of the ultrasonic signal when each ultrasonic receiving unit receives the ultrasonic signal. Due to a longer propagation distance of the ultrasonic signal underwater, by means of sending the ultrasonic signal by the charging station, the effect of guiding the underwater cleaning robot to return to the charging station over a long distance can be achieved. Controlling the underwater cleaning robot to move towards the charging station refers to controlling the underwater cleaning robot to get close to the charging station.

Through the technical solutions provided in embodiments of the present disclosure, in response to a station returning instruction to the underwater cleaning robot, the ultrasonic signals sent by the charging station are received by means of at least two ultrasonic receiving units positioned at different positions of the underwater cleaning robot, where the station returning instruction is used for instructing the underwater cleaning robot to dock with the charging station. The underwater cleaning robot is controlled to move towards the charging station based on the signal parameters of the ultrasonic signals received by the at least two ultrasonic receiving units, to improve the efficiency of charging the underwater cleaning robot and improve the intelligence degree of the underwater cleaning robot.

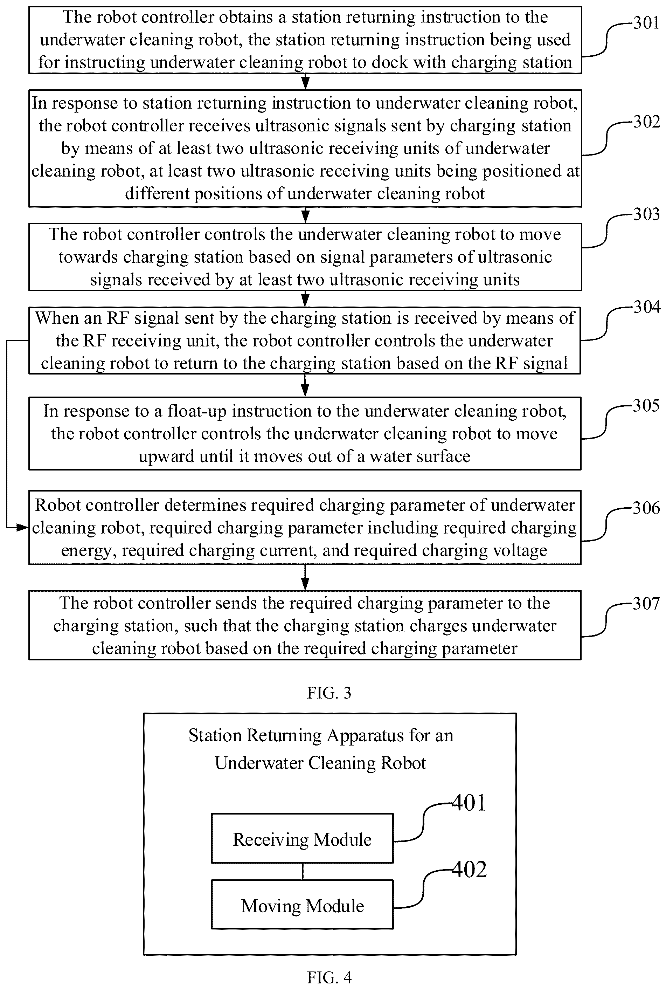

It should be noted that the above Steps 201 to 203 serve as a brief introduction to the technical solutions provided in the embodiments of the present disclosure. A more detailed explanation of the technical solutions provided in the embodiments of the present disclosure will be made below in conjunction with some examples. Referring to FIG. 3, the method includes the following steps.

In Step 301, the robot controller obtains a station returning instruction to the underwater cleaning robot, where the station returning instruction is used for instructing the underwater cleaning robot to dock with the charging station.

The robot controller is built into the underwater cleaning robot to control the underwater cleaning robot. The underwater cleaning robot is used for cleaning the bottom of the pool. When the underwater cleaning robot is positioned at the bottom of the pool, it can move on the bottom of the pool and perform cleaning tasks. Correspondingly, the motion of the underwater cleaning robot includes movement or rotation of the underwater cleaning robot at the bottom of the pool. The bottom of the underwater cleaning robot is equipped with a travelling unit. By driving the travelling unit, the underwater cleaning robot can be controlled to move on the bottom of the pool. The travelling unit includes a travelling wheel. By driving the travelling unit, the travelling wheel can be driven to rotate, such that the underwater cleaning robot is driven to move. The station returning instruction is used for instructing the underwater cleaning robot to dock with the charging station, such that the underwater cleaning robot is charged by means of the charging station.

In some embodiments, the charging station is docked with the underwater cleaning robot and can charge the underwater cleaning robot. The charging station is positioned underwater, for example, at the bottom of the pool. The charging station is equipped with a wireless charging component, and correspondingly, the underwater cleaning robot also includes a wireless charging unit. Through cooperation between the wireless charging component and the wireless charging unit, wireless charging of the underwater cleaning robot can be achieved. The charging station and the underwater cleaning robot are both positioned underwater, so there is no need to salvage the underwater cleaning robot when charging it, instead the underwater cleaning robot is charged directly by the charging station by means of wireless charging.

In one possible implementation, the robot controller triggers the station returning instruction when a state parameter of the underwater cleaning robot meets a preset state condition.

The state parameter is used for reflecting the state of the underwater cleaning robot. In some embodiments, the state parameter includes at least one of remaining battery level, a single cleaning duration, and a single cleaning area. The underwater cleaning robot is powered by a built-in battery, and the remaining battery level is the current battery level of the built-in battery, the remaining battery level can reflect the remaining operation duration of the underwater cleaning robot. The single cleaning duration refers to a cumulative cleaning duration when the underwater cleaning robot performs a single cleaning task. The single cleaning area refers to a cumulative cleaning area when the underwater cleaning robot performs the single cleaning task. The preset state condition is set by technical personnel according to actual situations, and no limitations are imposed on this in the embodiments of the present disclosure. When the state parameter of the underwater cleaning robot meets the preset state condition, it means that the underwater cleaning robot needs to be charged.

In this implementation, the station returning instruction can be actively triggered when the state parameter of the underwater cleaning robot meets the preset state condition, thereby achieving the intelligent charging of the underwater cleaning robot and improving the efficiency of charging the underwater cleaning robot.

For example, the robot controller obtains the state parameter of the underwater cleaning robot, where the state parameter includes at least one of remaining battery level, a single cleaning duration, and a single cleaning area. The robot controller triggers the station returning instruction when the remaining battery level is less than or equal to a battery level threshold, the single cleaning duration is greater than or equal to a cleaning duration threshold, and the single cleaning area is greater than or equal to a cleaning area threshold.

The battery level threshold is used for limiting the minimum battery level of the underwater cleaning robot, the cleaning duration threshold is used for limiting the single cleaning duration of the underwater cleaning robot, and the cleaning area threshold is used for limiting the single cleaning area of the underwater cleaning robot, such that the remaining battery level of the underwater cleaning robot can ensure that the underwater cleaning robot can move to the position where the charging station is. The battery level threshold, the cleaning duration threshold, and the cleaning area threshold are set by the technical personnel according to actual situations, and of course may also be adjusted by workers according to needs, and no limitations are imposed on this in the embodiments of the present disclosure.

In one possible implementation, the robot controller receives the station returning instruction sent by the charging station.

The charging station has a communication component, which can receive and send information. In some embodiments, the communication component also has an information forwarding function. That is, when a device cannot directly communicate with the underwater cleaning robot, the device may send information to the charging station, and the charging station forwards the information to the underwater cleaning robot by means of the communication component, thereby achieving communication between the device and the underwater cleaning robot.

To provide a clearer explanation of the above implementation, the above implementation is described below in two examples.

In Example 1, the robot controller receives the station returning instruction sent by the charging station, and the station returning instruction is actively sent by the charging station.

In Example 2, the robot controller receives the station returning instruction sent by the charging station, and the station returning instruction is sent by a terminal associated with the underwater cleaning robot to the charging station and then is forwarded by the charging station.

The terminal associated with the underwater cleaning robot is a terminal bound to the underwater cleaning robot, and the associated terminal has the authority to control the underwater cleaning robot.

In one possible implementation, the robot controller receives the station returning instruction sent by the terminal associated with the underwater cleaning robot.

In this implementation, the associated terminal can directly communicate with the underwater cleaning robot, and the robot controller can directly receive the station returning instruction sent by the associated terminal.

It should be noted that the robot controller can obtain the station returning instruction through any of the above implementations, and no limitations are imposed on this in the embodiments of the present disclosure.

Alternatively, in addition to the Step 301, the robot controller can also perform the following steps.

In one possible implementation, the robot controller obtains a cleaning work plan, which includes planned cleaning time and any one of a planned cleaning duration, a planned cleaning area, and a planned cleaning frequency. The robot controller controls the underwater cleaning robot to perform a cleaning task based on the cleaning work plan.

The cleaning task is an underwater cleaning task performed by the underwater cleaning robot. The planned cleaning time is starting time for controlling the underwater cleaning robot to perform the cleaning task. The planned cleaning time may be either periodic starting time or one starting time, which may be set by the workers according to the actual situations, and no limitations are imposed on this in the embodiments of the present disclosure. The planned cleaning duration is a planned duration for performing a single cleaning task. That is, when the cumulative duration for performing the single cleaning task reaches the planned cleaning duration, it means that the single cleaning task has been completed. The planned cleaning area is a planned area for performing a single cleaning task. That is, when the cumulative area for performing the single cleaning task reaches the planned cleaning area, it means that the single cleaning task has been completed. The planned cleaning frequency refers to a planned frequency for performing a single cleaning task. That is, when the cleaning task with the planned cleaning frequency is completed at a designated location, it means that the single cleaning task has been completed.

In Step 302, in response to the station returning instruction to the underwater cleaning robot, the robot controller receives ultrasonic signals sent by the charging station by means of the at least two ultrasonic receiving units of the underwater cleaning robot, where the at least two ultrasonic receiving units are positioned at different positions of the underwater cleaning robot.

In addition to charging the underwater cleaning robot, the charging station can also send ultrasonic signals and RF signals, both of which are used for guiding the underwater cleaning robot to dock with the charging station. In some embodiments, the charging station includes at least two ultrasonic sending units configured to send the ultrasonic signals. The at least two ultrasonic receiving units of the underwater cleaning robot are configured to receive the ultrasonic signals sent by the charging station. The at least two ultrasonic receiving units are positioned at different positions of the underwater cleaning robot, such that the robot controller achieves positioning of the underwater cleaning robot by means of the ultrasonic signals received by the at least two ultrasonic receiving units, where the positioning here refers to determining a relative positional relationship between the underwater cleaning robot and the charging station. For example, referring to FIG. 1, a side view side and a top view of the charging station and the underwater cleaning robot are provided. As can be seen from FIG. 1, both the charging station and the underwater cleaning robot are positioned underwater, and the charging station and the underwater cleaning robot are in the same space. The underwater cleaning robot can move from its current position to the position where the charging station is. In some embodiments, the charging station periodically sends the ultrasonic signals.

In one possible implementation, in response to the station returning instruction to the underwater cleaning robot, the robot controller sends a start command to the at least two ultrasonic receiving units. When the at least two ultrasonic receiving units are both started, the robot controller receives the ultrasonic signals sent by the charging station by means of the at least two ultrasonic receiving units.

In this implementation, in response to the station returning instruction, the at least two ultrasonic receiving units are restarted, which means that the at least two ultrasonic receiving units do not need to be kept in a starting state always, thereby saving the power of the underwater cleaning robot. When the at least two ultrasonic receiving units are started, the ultrasonic signals sent by the charging station are received by means of the at least two ultrasonic receiving units, and subsequently, the positioning of the underwater cleaning robot can be achieved based on the ultrasonic signals.

In some embodiments, when the robot controller fails to receive the ultrasonic signals sent by the charging station by means of the at least two ultrasonic receiving units, the robot controller controls the underwater cleaning robot to rotate to adjust the positions of the at least two ultrasonic receiving units until the at least two ultrasonic receiving units receive the ultrasonic signals.

In Step 303, the robot controller controls the underwater cleaning robot to move towards the charging station based on the signal parameters of the ultrasonic signals received by the at least two ultrasonic receiving units.

The ultrasonic signal is also known as an ultrasonic wave, and the signal parameter of the ultrasonic signal is used for representing a reception parameter corresponding to the ultrasonic signal when each ultrasonic receiving unit receives the ultrasonic signal. The signal parameters of the ultrasonic signals received by the at least two ultrasonic receiving units refer to the signal parameters of the ultrasonic signals received by each ultrasonic receiving unit. That is, when the number of the at least two ultrasonic receiving units is two, the number of the signal parameters is also two. In some embodiments, the signal parameter includes time when each ultrasonic receiving unit receives the ultrasonic signal and the signal strength of the ultrasonic signal when each ultrasonic receiving unit receives the ultrasonic signal. Due to a longer propagation distance of the ultrasonic signal underwater, by means of sending the ultrasonic signal by the charging station, the effect of guiding the underwater cleaning robot to return to the charging station over a long distance can be achieved. Controlling the underwater cleaning robot to move towards the charging station refers to controlling the underwater cleaning robot to get close to the charging station.

In one possible implementation, the robot controller determines the target moving direction of the underwater cleaning robot based on the signal parameters of the ultrasonic signals received by the at least two ultrasonic receiving units, where the target moving direction is a moving direction close to the charging station. The robot controller controls the underwater cleaning robot to move in the target moving direction.

The signal parameter includes at least one of signal reception time and signal strength. Because the charging station periodically sends ultrasonic signals, each of the at least two ultrasonic receiving units has one signal reception time for each ultrasonic signal sending period of the charging station. The signal strength can reflect a distance between the underwater cleaning robot and the charging station. The stronger the signal strength, the closer the distance between the underwater cleaning robot and the charging station; and the weaker the signal strength, the farther the distance between the underwater cleaning robot and the charging station.

In this implementation, the target moving direction of the underwater cleaning robot can be determined based on the signal parameters of the ultrasonic signals received by the at least two ultrasonic receiving units, thus the underwater cleaning robot can be controlled to move in the target moving direction such that the underwater cleaning robot gets close to the charging station.

To provide a clearer explanation of the above implementation, the above implementation will be described below in two parts.

In a first part, the robot controller determines the target moving direction of the underwater cleaning robot based on the signal parameters of the ultrasonic signals received by the at least two ultrasonic receiving units.

In one possible implementation, the signal parameters include signal reception time, and the robot controller determines the target moving direction of the underwater cleaning robot based on the signal reception time at which the at least two ultrasonic receiving units receive the ultrasonic signals.

In this implementation, the target moving direction of the underwater cleaning robot can be determined based on the signal reception time at which the at least two ultrasonic receiving units receive the ultrasonic signals, and thus the efficiency of determining the target moving direction is higher.

For example, the robot controller determines the target moving direction of the underwater cleaning robot based on a difference between the signal reception time at which the at least two ultrasonic receiving units receive the ultrasonic signals. Because the ultrasonic signals are periodically sent by the charging station, the signal reception time can reflect the distance between the ultrasonic receiving unit and the charging station. That is, for two ultrasonic receiving units, when the signal reception time of one ultrasonic receiving unit is earlier, the distance between this ultrasonic receiving unit and the charging station is smaller than that between the other ultrasonic receiving unit and the charging station.

For example, the robot controller determines the target moving direction of the underwater cleaning robot based on the difference between the signal reception time at which the at least two ultrasonic receiving units receive the ultrasonic signals and the positions of the at least two ultrasonic receiving units on the underwater cleaning robot. Alternatively, the robot controller determines, as the target moving direction, a direction corresponding to the ultrasonic receiving unit with earlier signal reception time among the at least two ultrasonic receiving units, where the direction corresponding to the ultrasonic receiving unit refers to a direction opposite to a direction in which the ultrasonic receiving unit receives the ultrasonic wave.

In one possible implementation, the signal parameters include signal strength, and the robot controller determines the target moving direction of the underwater cleaning robot based on the signal strength of the ultrasonic signals received by the at least two ultrasonic receiving units.

In this implementation, the target moving direction of the underwater cleaning robot can be determined based on the signal strength of the ultrasonic signals received by the at least two ultrasonic receiving units, and thus the efficiency of determining the target moving direction is higher.

For example, the robot controller determines the target moving direction of the underwater cleaning robot based on a difference between the signal strength of the ultrasonic signals received by the at least two ultrasonic receiving units. Because the ultrasonic signals are periodically sent by the charging station, the signal strength can reflect the distance between the ultrasonic receiving unit and the charging station. That is, for two ultrasonic receiving units, when the signal strength of one ultrasonic receiving unit is stronger, the distance between this ultrasonic receiving unit and the charging station is smaller than that between the other ultrasonic receiving unit and the charging station.

For example, the robot controller determines the target moving direction of the underwater cleaning robot based on the difference between the signal strength of the ultrasonic signals received by the at least two ultrasonic receiving units and the positions of the at least two ultrasonic receiving units on the underwater cleaning robot. Alternatively, the robot controller determines, as the target moving direction, a direction corresponding to the ultrasonic receiving unit with stronger signal strength among the at least two ultrasonic receiving units, where the direction corresponding to the ultrasonic receiving unit refers to direction opposite to a direction in which the ultrasonic receiving unit receives the ultrasonic wave.

In one possible implementation, the signal parameters include signal reception time and signal strength, and the robot controller determines the target moving direction of the underwater cleaning robot based on the signal reception time and the signal strength of the ultrasonic signals received by the at least two ultrasonic receiving units.

In this implementation, the target moving direction is determined based on the signal reception time and the signal strength, and thus the accuracy of determining the target moving direction is higher.

For example, the robot controller determines a first moving direction of the underwater cleaning robot based on a difference between the signal reception time at which the at least two ultrasonic receiving units receive the ultrasonic signals. The robot controller determines a second moving direction of the underwater cleaning robot based on a difference between the signal strength of the ultrasonic signals received by the at least two ultrasonic receiving units. The robot controller obtains the target moving direction by fusing the first moving direction with the second moving direction.

Manners of determining the first moving direction and the second moving direction belong to the same inventive concept as the above two implementations, and references can be made to the description of the above two implementations for their implementation processes, which are not to be described in detail here. Methods for fusing the first moving direction with the second moving direction are described below.

In some embodiments, the robot controller performs a weighted fusion on the first moving direction and the second moving direction using a first confidence level and a second confidence level to obtain the target moving direction, where the first confidence level is a confidence level corresponding to the signal reception time, and the second confidence level is a confidence level corresponding to the signal strength. The first confidence level and the second confidence level are set by the technical personnel according to the actual situations, and no limitations are imposed on this in the embodiments of the present disclosure.

In a second part, the robot controller controls the underwater cleaning robot to move in the target moving direction.

In one possible implementation, the robot controller controls the underwater cleaning robot to rotate towards the target moving direction. When the underwater cleaning robot rotates to the target moving direction, the robot controller controls the underwater cleaning robot to move forward.

Rotating towards the target moving direction refers to changing the forward direction of the underwater cleaning robot to the target moving direction. Correspondingly, rotating the underwater cleaning robot to the target moving direction refers to changing the forward direction of the underwater cleaning robot to the target orientation. In some embodiments, the robot controller determines the forward direction by means of a gyroscope of the underwater cleaning robot.

For example, the robot controller determines a direction deviation between the current orientation of the underwater cleaning robot and the target moving direction. Based on the direction deviation, the robot controller controls the underwater cleaning robot to rotate. When the underwater cleaning robot rotates to the target moving direction, the robot controller sends a driving command to a driving unit of the underwater cleaning robot, such that the driving unit drives the underwater cleaning robot to move forward.

It should be noted that when the robot controller controls the underwater cleaning robot to move in the target moving direction, the robot controller can adjust the moving direction of the underwater cleaning robot based on the signal parameters of the ultrasonic signals received by the at least two ultrasonic receiving units, such that the underwater cleaning robot can maintain the trend of moving towards the charging station.

In Step 304, when an RF signal sent by the charging station is received by means of the RF receiving unit, the robot controller controls the underwater cleaning robot to return to the charging station based on the RF signal.

Data transmission between the charging station and the underwater cleaning robot can be achieved by means of the RF signal, thereby achieving precise control of the underwater cleaning robot. That is, the underwater cleaning robot is guided to return to the charging station, thereby improving the intelligence degree of the underwater cleaning robot. The charging station sends the RF signal in real time. Because the underwater propagation distance of the RF signal is short, when the RF receiving unit has received the RF signal, this indicates that the underwater cleaning robot has moved near the charging station.

In one possible implementation, when the RF signal sent by the charging station is received by means of the RF receiving unit, the robot controller establishes a communication channel with the charging station based on the RF signal. The robot controller obtains station returning information transmitted by the charging station through the communication channel, where the station returning information includes clock information and ultrasonic signal sending time. Based on the signal parameters of the ultrasonic signals received by the at least two ultrasonic receiving units and the station returning information, the robot controller controls the underwater cleaning robot to return to the charging station.

The clock information is used for synchronizing the clock of the underwater cleaning robot and the clock of the charging station, and the ultrasonic signal sending time is time when the charging station sends the ultrasonic signal.

In this implementation, upon receiving the RF signal, the robot controller can establish a communication channel with the charging station based on the RF signal, and obtain the station returning information based on the communication signal. Based on the station returning information and the signal parameters of the ultrasonic signals received by the at least two ultrasonic receiving units, the robot controller controls the underwater cleaning robot to return to the charging station, thereby achieving precise control of the underwater cleaning robot.

For example, when the RF signal sent by the charging station is received by means of the RF receiving unit, the robot controller establishes the communication channel with the charging station based on the RF signal. The robot controller obtains station returning information transmitted by the charging station through the communication channel, where the station returning information includes clock information and ultrasonic signal sending time. The robot controller obtains the clock information and the ultrasonic signal sending time from the station returning information. The robot controller performs clock adjustments based on the clock information, such that the clock of the underwater cleaning robot keeps synchronization with that of the charging station. The signal parameter is the signal reception time, and the robot controller determines a distance between the underwater cleaning robot and the charging station based on the signal reception time and the ultrasonic signal sending time. The robot controller controls the underwater cleaning robot to return to the charging station based on the distance.

In one possible implementation, when the RF signal sent by the charging station is received by means of the RF receiving unit, the robot controller obtains environmental information of environment where the underwater cleaning robot is. The robot controller controls the underwater cleaning robot to return to the charging station based on the environmental information and the RF signal.

In some embodiments, the environmental information includes at least one of an environmental image and an environmental point cloud.

Taking an example where the environmental information includes the environmental image, when the RF signal sent by the charging station is received by means of the RF receiving unit, the robot controller obtains the environmental image of the environment where the underwater cleaning robot is. The robot controller establishes the communication channel with the charging station based on the RF signal. The robot controller obtains station returning information transmitted by the charging station through the communication channel, where the station returning information includes clock information and ultrasonic signal sending time. Based on the signal parameters of the ultrasonic signals received by the at least two ultrasonic receiving units, the station returning information and the environmental image, the robot controller controls the underwater cleaning robot to return to the charging station.

Reference will be made below to a method for the robot controller controlling the underwater cleaning robot to return to the charging station based on the signal parameters of the ultrasonic signals received by the at least two ultrasonic receiving units, the station returning information and the environmental image.

In one possible implementation, the robot controller obtains the clock information and the ultrasonic signal sending time from the station returning information. The robot controller performs clock adjustments based on the clock information, such that the clock of the underwater cleaning robot keeps synchronization with that of the charging station. The signal parameter is the signal reception time, and the robot controller determines a distance between the underwater cleaning robot and the charging station based on the signal reception time and the ultrasonic signal sending time. The robot controller controls the underwater cleaning robot to return to the charging station based on the distance and the environmental image.

Alternatively, after the Step 304, the robot controller can also execute the following Step 305 or Steps 306 to 307 according to the actual situations, and no limitations are imposed on this in the embodiments of the present disclosure.

In the Step 305, in response to a float-up instruction to the underwater cleaning robot, the robot controller controls the underwater cleaning robot to move upward until it moves out of a water surface.

The float-up instruction is used for instructing the underwater cleaning robot to move out of the water surface. The float-up instruction may be automatically triggered by the robot controller when the underwater cleaning robot meets a preset float-up condition, or may be sent by the charging station, or sent by the terminal associated with the underwater cleaning robot, and no limitations are imposed on this in the embodiments of the present disclosure. In some embodiments, the underwater cleaning robot meets the preset float-up condition, which means that the underwater cleaning robot is fully charged and the cleaning task is completed.

In one possible implementation, in response to the float-up instruction to the underwater cleaning robot, the robot controller controls the underwater cleaning robot to disengage from the charging station and move towards a wall beside the charging station. The robot controller controls the underwater cleaning robot to climb along the wall until it moves out of the water surface.

Through the Step 305, the underwater cleaning robot can float up to a position above the charging station, making it easier for the workers to salvage the underwater cleaning robot, to improve the efficiency of salvaging the underwater cleaning robot.

In the Step 306, the robot controller determines the required charging parameter of the underwater cleaning robot, where the required charging parameter includes required charging energy, required charging current, and required charging voltage.

In one possible implementation, the robot controller determines the required charging energy based on the cleaning task completion progress of the underwater cleaning robot. The robot controller determines the required charging voltage and the required charging current based on the remaining battery level of the underwater cleaning robot.

The cleaning task completion progress is used for reflecting the completion progress of this cleaning task. The cleaning task completion progress is expressed as a percentage. When the cleaning task completion progress is 0%, it means that the cleaning task has not yet been started. When the cleaning task completion progress is 100%, it means that the cleaning task has been completed. When the cleaning task completion progress is between 0% and 100%, it can reflect the completion rate of the cleaning task.

In the Step 307, the robot controller sends the required charging parameter to the charging station, such that the charging station charges the underwater cleaning robot based on the required charging parameter.

Through the Steps 306 and 307, the robot controller can send the required charging parameter to the charging station, such that the charging station can charge the underwater cleaning robot based on the required charging parameter, thereby improving charging efficiency and effect.

Alternatively, after the Step 307, the robot controller can also perform the following steps.

In one possible implementation, the robot controller determines a cleaning task completion progress when the remaining battery level of the underwater cleaning robot reaches the required charging energy. When the cleaning task completion progress indicates that a cleaning task has not been completed yet, the robot controller controls the underwater cleaning robot to stop charging and continue executing the cleaning task.

Optional embodiments of the present disclosure can be formed by an arbitrary combination of all the foregoing optional technical solutions, and thus are not to be repeated any more herein.

Through the technical solutions provided in the embodiments of the present disclosure, in response to a station returning instruction to the underwater cleaning robot, the ultrasonic signals sent by the charging station are received by means of at least two ultrasonic receiving units positioned at different positions of the underwater cleaning robot, where the station returning instruction is used for instructing the underwater cleaning robot to dock with the charging station. The underwater cleaning robot is controlled to move towards the charging station based on signal parameters of the ultrasonic signals received by the at least two ultrasonic receiving units. When an RF signal sent by the charging station is received by means of the RF receiving unit, the underwater cleaning robot is controlled to return to the charging station based on the RF signal, such that the underwater cleaning robot can dock with the charging station. Thus, the underwater cleaning robot can be charged by using the charging station, the efficiency of charging the underwater cleaning robot is improved, and the intelligence degree of the underwater cleaning robot is improved.

FIG. 4 is a schematic structural diagram of a station returning apparatus for an underwater cleaning robot according to an embodiment of the present disclosure. Referring to FIG. 4, the apparatus includes a receiving module 401 and a moving module 402.

The receiving module 401 is configured to receive the ultrasonic signals sent by the charging station by means of the at least two ultrasonic receiving units of the underwater cleaning robot in response to a station returning instruction to the underwater cleaning robot. The station returning instruction is used for instructing the underwater cleaning robot to dock with the charging station. The at least two ultrasonic receiving units are positioned at different positions of the underwater cleaning robot.

The moving module 402 is configured to control the underwater cleaning robot to move towards the charging station based on signal parameters of the ultrasonic signals received by the at least two ultrasonic receiving units.

In one possible implementation, the moving module 402 is configured to determine a target moving direction of the underwater cleaning robot based on the signal parameters of the ultrasonic signals received by the at least two ultrasonic receiving units, where the target moving direction is a moving direction close to the charging station. The underwater cleaning robot is controlled to move in the target moving direction.

In one possible implementation, the signal parameters include at least one of signal reception time and signal strength, and the moving module 402 is configured to:
determine the target moving direction of the underwater cleaning robot based on the signal reception time at which the at least two ultrasonic receiving units receive the ultrasonic signals; or
determine the target moving direction of the underwater cleaning robot based on the signal strength of the ultrasonic signals received by the at least two ultrasonic receiving units; or
determine the target moving direction of the underwater cleaning robot based on the signal reception time at which the at least two ultrasonic receiving units receive the ultrasonic signals and the signal strength of the ultrasonic signals.

In one possible implementation, the moving module 402 is configured to determine a first moving direction of the underwater cleaning robot based on a difference between the signal reception time at which the at least two ultrasonic receiving units receive the ultrasonic signals. The moving module 402 determines a second moving direction of the underwater cleaning robot based on a difference between the signal strength of the ultrasonic signals received by the at least two ultrasonic receiving units. The target moving direction is obtained by fusing the first moving direction with the second moving direction.

In one possible implementation, the moving module 402 is configured to perform a weighted fusion on the first moving direction and the second moving direction using a first confidence level and a second confidence level to obtain the target moving direction, where the first confidence level is a confidence level corresponding to the signal reception time, and the second confidence level is a confidence level corresponding to the signal strength.

In one possible implementation, the apparatus also includes a station returning module, which is configured to control the underwater cleaning robot to return to the charging station based on the RF signal when an RF signal sent by the charging station is received by means of the RF receiving unit.

In one possible implementation, the station returning module is configured to establish a communication channel with the charging station based on the RF signal when the RF signal sent by the charging station is received by means of the RF receiving unit. The station returning module obtains station returning information transmitted by the charging station through the communication channel, where the station returning information includes clock information and ultrasonic signal sending time. The station returning module controls the underwater cleaning robot to return to the charging station based on the signal parameters of the ultrasonic signals received by the at least two ultrasonic receiving units and the station returning information.

In one possible implementation, the apparatus also includes an instruction receiving module 401 configured to:
trigger the station returning instruction when a state parameter of the underwater cleaning robot meets a preset state condition; or
receive the station returning instruction sent by the charging station; or
receive the station returning instruction sent by a terminal associated with the underwater cleaning robot.

In one possible implementation, the state parameter includes at least one of remaining battery level, a single cleaning duration, and a single cleaning area. The state parameter of the underwater cleaning robot meeting the preset state condition includes at least one of:
the remaining battery level being less than or equal to a battery level threshold; or
the single cleaning duration being greater than or equal to a cleaning duration threshold; or
the single cleaning area being greater than or equal to a cleaning area threshold.

In one possible implementation, the station returning module is configured to obtain environmental information of environment where the underwater cleaning robot is, when the RF signal sent by the charging station is received by means of the RF receiving unit. The station returning module is also configured to control the underwater cleaning robot to return to the charging station based on the environmental information and the RF signal.

In one possible implementation, the moving module 402 is also configured to control, in response to the float-up instruction to the underwater cleaning robot, the underwater cleaning robot to move upward until it moves out of the water surface.

In one possible implementation, the apparatus also includes a task execution module.

The task execution module is configured to obtain a cleaning work plan, which includes planned cleaning time and any one of a planned cleaning duration, a planned cleaning area, and a planned cleaning frequency. The task execution module is also configured to control the underwater cleaning robot to perform a cleaning task based on the cleaning work plan.

In one possible implementation, the apparatus also includes a sending module.

The sending module is configured to determine a required charging parameter of the underwater cleaning robot, where the required charging parameter includes required charging energy, required charging current, and required charging voltage. The sending module is also configured to send the required charging parameter to the charging station, such that the charging station charges the underwater cleaning robot based on the required charging parameter.

In one possible implementation, the sending module is also configured to determine the required charging energy based on a cleaning task completion progress of the underwater cleaning robot. The sending module is also configured to determine the required charging voltage and the required charging current based on remaining battery level of the underwater cleaning robot.

In one possible implementation, the apparatus also includes a control module, which is configured to determine a cleaning task completion progress when the remaining battery level of the underwater cleaning robot reaches the required charging energy. The control module is also configured to control, when the cleaning task completion progress indicates that a cleaning task has not been completed yet, the underwater cleaning robot to stop charging and continue executing the cleaning task.

It should be explained that, when the station returning apparatus for the underwater cleaning robot provided by the above embodiments controls the underwater cleaning robot to return to the charging station, the above divided respective function modules are described as an example. In actual applications, the above allocated functions may be implemented by different function modules according to actual needs, that is, the inner structure of the robot controller may be divided into different function modules to implement part or all of the functions described as above. In addition, the station returning apparatus for the underwater cleaning robot and the station returning method for the underwater cleaning robot provided in the above embodiments belong to the same concept. Therefore, references may be made to the method embodiments for specific implementation processes of the station returning apparatus, and thus detailed descriptions thereof are omitted here.

Through the technical solutions provided in the embodiments of the present disclosure, in response to a station returning instruction to the underwater cleaning robot, the ultrasonic signals sent by the charging station are received by means of at least two ultrasonic receiving units positioned at different positions of the underwater cleaning robot, where the station returning instruction is used for instructing the underwater cleaning robot to dock with the charging station. The underwater cleaning robot is controlled to move towards the charging station based on signal parameters of the ultrasonic signals received by the at least two ultrasonic receiving units. When an RF signal sent by the charging station is received by means of the RF receiving unit, the underwater cleaning robot is controlled to return to the charging station based on the RF signal, such that the underwater cleaning robot can dock with the charging station. Thus, the underwater cleaning robot can be charged by using the charging station, the efficiency of charging the underwater cleaning robot is improved, and the intelligence degree of the underwater cleaning robot is improved.

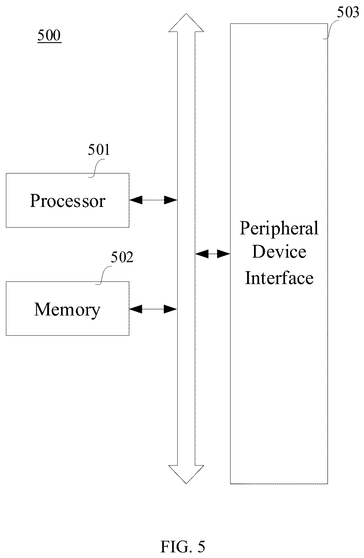

Embodiments of the present disclosure also provide an underwater cleaning robot, and FIG. 5 is a schematic structural diagram of a robot controller according to an embodiment of the present disclosure. Typically, the underwater cleaning robot includes a robot controller 500, which includes one or more processors 501 and one or more memories 502.

The processor 501 may include one or more processing cores, such as a quad-core processor or an octa-core processor. The processor 501 may be implemented in at least one hardware form from Digital Signal Processing (DSP), a Field-Programmable Gate Array (FPGA), and a Programmable Logic Array (PLA). The processor 501 may also include a main processor and a coprocessor. The main processor is a processor used for processing data in an awake state, and is also known as a Central Processing Unit (CPU). The coprocessor is a low power processor used for processing data in a standby state. In some embodiments, the processor 501 may be integrated with a Graphics Processing Unit (GPU), which is used for rendering and drawing contents required to be displayed on a display screen. In some embodiments, the processor 501 may also include an AI (Artificial Intelligence) processor for processing computational operations related to machine learning.

The memory 502 may include one or more computer-readable storage media, which may be non-transient. The memory 502 may also include a high-speed random access memory, and a non-volatile memory such as one or more disk storage devices or flash storage devices. In some embodiments, the non-transient computer-readable storage medium in the memory 502 is used for storing at least one computer program for execution by the processor 501 to implement the station returning method for the underwater cleaning robot provided in the method embodiments of the present disclosure.

In some embodiments, the underwater cleaning robot 500 may also alternatively include a peripheral device interface 503 and at least one peripheral device. The processor 501, the memory 502, and the peripheral device interface 503 may be connected through a bus or a signal line. Each peripheral device may be connected to the peripheral device interface 503 through a bus, a signal line, or a circuit board.

Those skilled in the art may understand that the structure shown in FIG. 5 does not constitute a limitation on the underwater cleaning robot 500, and the underwater cleaning robot 500 may include more or fewer components than shown in the figure, or combine some components, or adopt different component arrangements.

In an exemplary embodiment, there is also provided a computer-readable storage medium such as a memory comprising a computer program. The computer program may be executed by the processor to perform the station returning method for the underwater cleaning robot in the above embodiments. For example, the computer-readable storage medium may be a Read-Only Memory (ROM), a Random Access Memory (RAM), a Compact Disc Read-Only Memory (CD-ROM), a magnetic tape, a floppy disk, or an optical data storage device.

In an exemplary embodiment, there is also provided a computer program product or a computer program comprising program code stored in a computer-readable storage medium. The processor of the robot controller reads the program code from the computer-readable storage medium, and the processor executes the program code, causing the robot controller to perform the station returning method for the underwater cleaning robot as described above.

In some embodiments, the computer program involved in the embodiments of the present disclosure may be deployed and executed on one robot controller, or executed on a plurality of robot controllers positioned in one location, or executed on a plurality of robot controllers distributed in a plurality of locations and interconnected through a communication network. The plurality of robot controllers distributed in the plurality of locations and interconnected through the communication network may form a blockchain system.

It should be understood for those skilled in the art that all or some steps in the above embodiments may be implemented by hardware, or by programs instructing related hardware. The programs may be stored in a computer-readable storage medium. The storage medium described as above may be a read-only memory, a magnetic disc, an optical disc or the like.

The embodiments set forth above are only illustrated as alternative embodiments of the present disclosure, and are not intended to limit the present disclosure. All modifications, equivalent substitutions and improvements made within the spirit and principles of the present disclosure shall fall within the protection scope of the present disclosure.

## Claims

1. A station returning method for an underwater cleaning robot, wherein the method comprises:
receiving ultrasonic signals sent by a charging station by means of at least two ultrasonic receiving units of the underwater cleaning robot in response to a station returning instruction to the underwater cleaning robot, the station returning instruction being used for instructing the underwater cleaning robot to dock with the charging station, and the at least two ultrasonic receiving units being positioned at different positions of the underwater cleaning robot;
controlling the underwater cleaning robot to move towards the charging station based on signal parameters of the ultrasonic signals received by the at least two ultrasonic receiving units.

2. The method according to claim 1, wherein controlling the underwater cleaning robot to move towards the charging station based on the signal parameters of the ultrasonic signals received by the at least two ultrasonic receiving units comprises:
determining a target moving direction of the underwater cleaning robot based on the signal parameters of the ultrasonic signals received by the at least two ultrasonic receiving units, the target moving direction being a moving direction close to the charging station;
controlling the underwater cleaning robot to move in the target moving direction.

3. The method according to claim 2, wherein the signal parameters comprise at least one of signal reception time and signal strength, and determining the target moving direction of the underwater cleaning robot based on the signal parameters of the ultrasonic signals received by the at least two ultrasonic receiving units comprises:
determining the target moving direction of the underwater cleaning robot based on the signal reception time at which the at least two ultrasonic receiving units receive the ultrasonic signals; or
determining the target moving direction of the underwater cleaning robot based on the signal strength of the ultrasonic signals received by the at least two ultrasonic receiving units; or
determining the target moving direction of the underwater cleaning robot based on the signal reception time and the signal strength of the ultrasonic signals received by the at least two ultrasonic receiving units.

4. The method according to claim 3, wherein determining the target moving direction of the underwater cleaning robot based on the signal reception time and the signal strength of the ultrasonic signals received by the at least two ultrasonic receiving units comprises:
determining a first moving direction of the underwater cleaning robot based on a difference between the signal reception time at which the at least two ultrasonic receiving units receive the ultrasonic signals;
determining a second moving direction of the underwater cleaning robot based on a difference between the signal strength of the ultrasonic signals received by the at least two ultrasonic receiving units;
fusing the first moving direction with the second moving direction to obtain the target moving direction.

5. The method according to claim 4, wherein fusing the first moving direction with the second moving direction to obtain the target moving direction comprises:
performing a weighted fusion on the first moving direction and the second moving direction using a first confidence level and a second confidence level to obtain the target moving direction, the first confidence level being a confidence level corresponding to the signal reception time, and the second confidence level being a confidence level corresponding to the signal strength.

6. The method according to claim 1, further comprising:
in response to the station returning instruction to the underwater cleaning robot, receiving wireless signals sent by the charging station by means of at least two wireless receiving units of the underwater cleaning robot, the station returning instruction being used for instructing the underwater cleaning robot to dock with the charging station, and the at least two wireless receiving units being positioned at different positions of the underwater cleaning robot;
controlling the underwater cleaning robot to move towards the charging station based on signal parameters of the wireless signals received by the at least two wireless receiving units.

7. The method according to claim 1, wherein after controlling the underwater cleaning robot to move towards the charging station based on the signal parameters of the ultrasonic signals received by the at least two ultrasonic receiving units, the method further comprises:
when a radio frequency (RF) signal sent by the charging station is received by means of an RF receiving unit, controlling the underwater cleaning robot to return to the charging station based on the RF signal.

8. The method according to claim 7, wherein controlling the underwater cleaning robot to return to the charging station based on the RF signal when the RF signal sent by the charging station is received by means of the RF receiving unit comprises:
when the RF signal sent by the charging station is received by means of the RF receiving unit, establishing a communication channel with the charging station based on the RF signal;
obtaining station returning information transmitted by the charging station through the communication channel, the station returning information comprising clock information and ultrasonic signal sending time;
controlling the underwater cleaning robot to return to the charging station based on the signal parameters of the ultrasonic signals received by the at least two ultrasonic receiving units and the station returning information.

9. The method according to claim 7, wherein controlling the underwater cleaning robot to return to the charging station based on the RF signal when the RF signal sent by the charging station is received by means of the RF receiving unit comprises:
when the RF signal sent by the charging station is received by means of the RF receiving unit, obtaining environmental information of environment where the underwater cleaning robot is;
controlling the underwater cleaning robot to return to the charging station based on the environmental information and the RF signal.

10. The method according to claim 7, wherein after controlling the underwater cleaning robot to return to the charging station based on the RF signal when the RF signal sent by the charging station is received by means of the RF receiving unit, the method further comprises:
in response to a float-up instruction to the underwater cleaning robot, controlling the underwater cleaning robot to move upward until it moves out of a water surface.

11. The method according to claim 7, wherein after controlling the underwater cleaning robot to return to the charging station based on the RF signal when the RF signal sent by the charging station is received by means of the RF receiving unit, the method further comprises:
determining a required charging parameter of the underwater cleaning robot, the required charging parameter comprising required charging energy, required charging current, and required charging voltage;
sending the required charging parameter to the charging station, such that the charging station charges the underwater cleaning robot based on the required charging parameter.

12. The method according to claim 11, wherein determining the required charging parameter of the underwater cleaning robot comprises:
determining the required charging energy based on a cleaning task completion progress of the underwater cleaning robot;
determining the required charging voltage and the required charging current based on remaining battery level of the underwater cleaning robot.

13. The method according to claim 11, wherein after sending the required charging parameter to the charging station, the method further comprises:
determining a cleaning task completion progress when the remaining battery level of the underwater cleaning robot reaches the required charging energy;
when the cleaning task completion progress indicates that a cleaning task has not been completed yet, controlling the underwater cleaning robot to stop charging and continue executing the cleaning task.

14. The method according to claim 1, wherein before receiving the ultrasonic signals sent by the charging station by means of the at least two ultrasonic receiving units of the underwater cleaning robot in response to the station returning instruction to the underwater cleaning robot, the method further comprises:
triggering the station returning instruction when a state parameter of the underwater cleaning robot meets a preset state condition; or
receiving the station returning instruction sent by the charging station; or
receiving the station returning instruction sent by a terminal associated with the underwater cleaning robot.

15. The method according to claim 14, wherein the state parameter comprises at least one of remaining battery level, a single cleaning duration, and a single cleaning area, and the state parameter of the underwater cleaning robot meeting the preset state condition comprises at least one of:
the remaining battery level being less than or equal to a battery level threshold;
the single cleaning duration being greater than or equal to a cleaning duration threshold; or
the single cleaning area being greater than or equal to a cleaning area threshold.

16. The method according to claim 1, further comprising:
obtaining a cleaning work plan comprising planned cleaning time and any one of a planned cleaning duration, a planned cleaning area, and a planned cleaning frequency;
controlling the underwater cleaning robot to perform a cleaning task based on the cleaning work plan.

17. A station returning apparatus for an underwater cleaning robot, wherein the apparatus comprises:
a receiving module configured to receive ultrasonic signals sent by a charging station by means of at least two ultrasonic receiving units of the underwater cleaning robot in response to a station returning instruction to the underwater cleaning robot, the station returning instruction being used for instructing the underwater cleaning robot to dock with the charging station, and the at least two ultrasonic receiving units being positioned at different positions of the underwater cleaning robot;
a moving module configured to control the underwater cleaning robot to move towards the charging station based on signal parameters of the ultrasonic signals received by the at least two ultrasonic receiving units.

18. An underwater cleaning robot, wherein the underwater cleaning robot comprises a robot controller comprising one or more processors and one or more memories, and the one or more memories store at least one computer program loaded and executed by the one or more processors to perform the station returning method for the underwater cleaning robot as claimed in any one of claims 1 to 16.
